# DEMANDE DE BREVET EUROPEEN

(11) **EP 1 914 495 A1**
(43) Date de publication de la demande: **23.04.2008**
(21) Numéro de dépôt: 06122662.7
(22) Date de dépôt: 20.10.2006
(51) Int. Cl.: F25D 31/00, F25D 3/06, F25D 3/08, A47J 41/00

(54) **Appareil pour le refroidissement d'un liquide alimentaire**

(71) Demandeur: Nestec S.A., 1800 Vevey (CH)
(72) Inventeur: Boussemart, Christophe, 74500, Lugrin (FR)
(74) Mandataire: Ravenel, Thierry Gérard Louis

(57) **Abrégé**

L'invention concerne un appareil (1, 101 ; 201) pour le refroidissement d'un liquide alimentaire comprenant un récipient (4 ; 104 ; 204). Au moins un organe moteur (6, 106, 206) disposé dans le récipient coopère avec au moins un corps de refroidissement (10 ; 110 ; 210) amovible pour guider et faire circuler le liquide alimentaire en circuit fermé. Le corps de refroidissement est conçu de manière à optimiser l'effet de refroidissement en augmentant la surface du liquide alimentaire en contact avec lui. A cet effet, il présente des conduits (11, 12 ; 112) aux travers desquels le liquide alimentaire passe de manière à favoriser l'échange thermique et à diminuer ainsi le temps nécessaire pour porter le liquide alimentaire à une température prédéterminée.

## Description

### DOMAINE TECHNIQUE

La présente invention concerne, de manière générale, un appareil pour refroidir des boissons ou des aliments liquides. L'invention concerne plus particulièrement un appareil comprenant un récipient destiné à recevoir un liquide alimentaire et comprenant des moyens pour faire circuler ce liquide alimentaire pour le refroidir par échange thermique avec un corps de refroidissement.

### ARRIERE-PLAN TECHNOLOGIQUE

Certaines boissons sont préparées à haute température et sont ensuite consommées de préférence à plus basses températures. Il peut s'agir notamment de boissons à base de café, de thé ou de lait. Il est notamment connu de tempérer le lait pour le biberon d'un bébé, ou de refroidir un thé vert pour le servir frais en été.

Pour refroidir une boisson, on peut par exemple lui ajouter de la glace. Toutefois, en diluant ainsi la boisson, on altère son goût. Il est également possible de laisser la boisson simplement reposer dans un endroit frais. Mais, un inconvénient de cette façon de faire est la lenteur du processus.

Il existe également des appareils prévus pour refroidir des boissons dans un contexte domestique ou professionnel. Le document DE20302158U notamment décrit un dispositif pour refroidir une boisson qui comprend un réservoir placé au-dessus d'un échangeur de chaleur à travers lequel la boisson à refroidir peut passer par gravité depuis le réservoir pour être ensuite versée dans une tasse. L'échangeur de chaleur doit être rempli par un liquide de refroidissement, par exemple de l'eau avec des glaçons.

Ce dispositif présente l'inconvénient de nécessiter l'emploi d'un moyen de refroidissement sous forme liquide qu'il faut verser dans l'échangeur de chaleur. La température du liquide de refroidissement, en général de l'eau avec des glaçons, n'est que de zéro degré Celsius, ce qui permet de rafraîchir la boisson, mais n'est pas vraiment suffisant pour la rendre glacée. D'autant plus que cette dernière ne passe qu'une seule fois à travers l'échangeur de chaleur. D'autre part, il faut souvent vider et remplir l'échangeur car le liquide de refroidissement se réchauffe rapidement. Il s'agit donc d'un système manuel fonctionnant par une simple descente par gravité du liquide à refroidir.

Le document US4357809 décrit un pot intégrant dans sa structure un gel réfrigérant pour maintenir les boissons à basse température. Le pot est à mettre préalablement dans un réfrigérateur et peut être utilisé ensuite soit pour refroidir une boisson chaude soit pour empêcher une boisson froide de se réchauffer.

Ce pot présente l'inconvénient d'avoir une faible surface d'échange thermique par rapport au volume de la boisson à refroidir et est donc plutôt destiné aux boissons froides pour éviter que ces dernières ne se réchauffent. Par ailleurs, le refroidissement est passif du fait que la boisson à l'intérieur du pot n'est pas en mouvement, ce qui diminue l'effet de refroidissement. De plus, quand le pot s'est réchauffé, il ne peut plus être utilisé et il faut le remettre dans le réfrigérateur.

Le document CH554139 décrit une machine à préparer et distribuer des boissons glacées, notamment des boissons formées d'une masse de particules de glace mélangées à des parties liquides. Cette machine est munie de moyens électriques pour refroidir tout en mélangeant la boisson se trouvant dans un réservoir transparent disposé verticalement au dessus de ces moyens.

Cette machine présente l'inconvénient de nécessiter un apport d'énergie électrique important pour fonctionner et de ne pas être vraiment adaptée au refroidissement rapide d'une boisson. De plus, sa construction est onéreuse et son entretien compliqué. Par ailleurs, le poids est aussi trop élevé pour une utilisation domestique.

### RESUME DE L'INVENTION

Un but de la présente invention est de pallier aux inconvénients susmentionnés. Plus spécifiquement, un but de la présente invention est de fournir un appareil apte à refroidir un liquide alimentaire rapidement. Par exemple, après avoir fait infuser du thé dans de l'eau bouillante ou bouillir du lait pour le biberon d'un bébé, la boisson doit pouvoir être refroidie en quelques instants pour être bue à une température prédéterminée, soit tempérée, soit froide, soit glacée.

Un autre but est de fournir un appareil de conception hygiénique, d'utilisation aisée et d'entretien simplifié, léger et bon marché, dont les éléments démontables peuvent être nettoyés facilement.

Un autre but est de réaliser un appareil dont les éléments peuvent être utilisés avec le produit existant défini dans la demande de brevet EP1656866A1. Ainsi ce produit initialement prévu pour préparer de la mousse de lait pourrait aussi être utilisé pour refroidir une boisson.

A cet effet, il est prévu de réaliser un appareil pour le refroidissement d'un liquide alimentaire comprenant un récipient pour le liquide alimentaire à refroidir et des moyens de refroidissement disposés dans le récipient, caractérisé en ce que les moyens de refroidissement comprennent au moins un corps de refroidissement amovible et conformé de manière à délimiter au moins un circuit pour le liquide alimentaire; un organe moteur étant par ailleurs prévu pour faire circuler le liquide alimentaire dans le circuit.

Conformément à la présente invention, le liquide alimentaire est guidé par le corps de refroidissement et circule donc en contact avec la surface de celui-ci. Cette caractéristique accélère le refroidissement. D'autre part, le recours à un organe moteur permet une circulation du liquide en boucles fermées et donc des contacts répétés du liquide avec le corps de refroidissement.

Selon une caractéristique de l'invention, l'organe moteur est une pompe. En particulier, la pompe est de préférence entraînable en rotation. Selon un mode possible, l'organe moteur produit sur le liquide un effet centrifuge. Il peut s'agir de préférence d'une roue à aube ou autre pompe du type centrifuge. Selon un autre mode, l'organe moteur est une pompe à déplacement positif. Il peut s'agir de préférence d'une vis d'Archimède ou d'autres moyens de transport équivalent telle qu'une pompe à cavité progressive.

D'autre part, selon la présente invention, le corps de refroidissement est amovible. Il est donc possible de faire accumuler préalablement du froid par le corps de refroidissement en le plaçant simplement dans un réfrigérateur ou un congélateur. Grâce à cette caractéristique, l'appareil selon la présente invention n'a pas besoin de produire lui-même du froid. Il peut donc être réalisé pour un prix de revient modéré, et être très simple à entretenir.

### BREVE DESCRIPTION DES FIGURES

D'autres caractéristiques et avantages de la présente invention apparaîtront à la lecture de la description qui va suivre, donnée uniquement à titre d'exemple non limitatif, et faite en référence aux dessins annexés dans lesquels :
la figure 1 est une vue latérale en coupe d'un premier mode de réalisation de l'appareil pour le refroidissement d'un liquide alimentaire selon la présente invention ;
- la figure 2 est une vue agrandie en coupe d'une partie de l'appareil de la figure 1 montrant le récipient et le corps de refroidissement ;
- la figure 3 est une vue latérale en coupe d'un deuxième mode de réalisation de l'appareil pour le refroidissement d'un liquide alimentaire selon la présente invention ;
- la figure 4 est une vue agrandie en coupe d'une partie de l'appareil de la figure 3 montrant le récipient avec le corps de refroidissement et l'organe moteur ;

La figure 5 est une vue latérale en coupe d'un troisième mode de réalisation de la présente invention. Ce mode de réalisation particulier correspond à une adaptation d'un appareil de l'art antérieur préalablement décrit dans le document de brevet EP 1'656'866 A1.

### DESCRIPTION DETAILLEE DE L'INVENTION

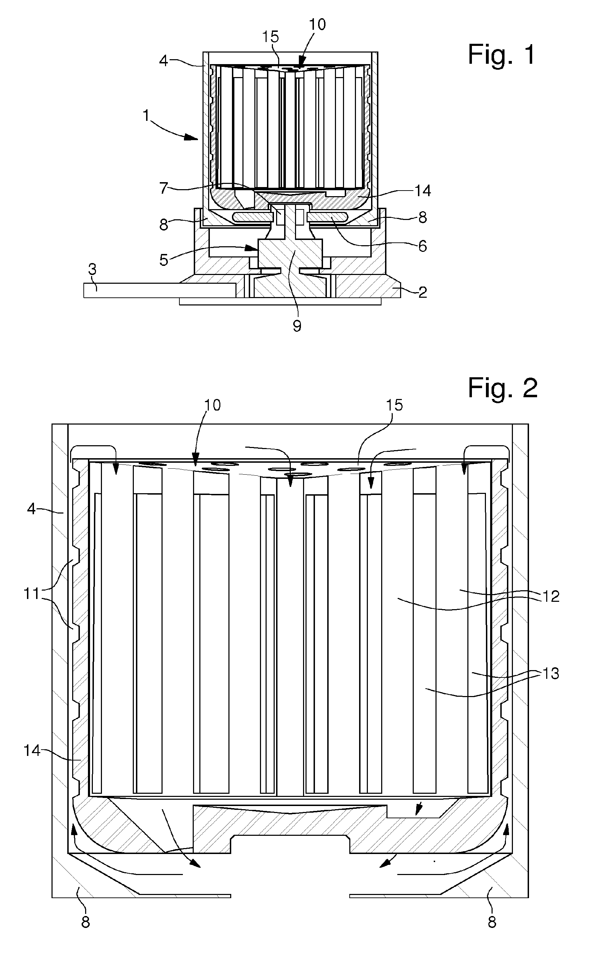

Un premier mode de réalisation de l'appareil pour le refroidissement d'un liquide alimentaire selon la présente invention va maintenant être décrit en se référant aux figures 1 et 2. La figure 1, représente un appareil pour le refroidissement d'un liquide alimentaire référencé généralement 1. L'appareil est posé sur une base d'alimentation en électricité 2. La base d'alimentation 2 est reliée au secteur par un cordon électrique 3. Dans le présent exemple, l'appareil de refroidissement 1 est, lui-même, un modèle sans fil qui est prévu pour se raccorder électriquement d'une manière connue de l'homme du métier dès qu'il est posé sur la base d'alimentation 2. Cette caractéristique a notamment l'avantage de rendre l'appareil plus facile à manipuler, en particulier au moment de verser la boisson. A cet effet, L'appareil de refroidissement peut avantageusement être muni d'une poignée (non représentée). L'appareil pour le refroidissement peut encore être équipé d'un couvercle amovible (non représenté) prévu pour protéger son contenu de la chaleur ainsi que d'autres formes de contamination pouvant provenir de l'extérieur.

On voit encore sur la figure 1 qu'un récipient 4 est aménagé dans la partie supérieure de l'appareil de refroidissement 1. Le récipient 4 est étanche et destiné à recevoir au moins un corps de refroidissement amovible 10 ainsi que le liquide alimentaire à refroidir. Les parois du récipient peuvent être en métal, en verre ou en un matériau synthétique compatible avec les liquides alimentaires. Il peut par ailleurs être moulé d'une seule pièce. On voit encore que le fond du récipient 4 s'incurve vers le haut et qu'il présente une partie inclinée 8 à sa périphérie.

À l'intérieur du récipient 4 est disposé un organe moteur 6 pour la mise en mouvement du liquide alimentaire. Selon le présent exemple, l'organe moteur à la forme d'une roue à aubes à écoulement radial. La roue à aubes 6 est disposée sur le fond du récipient 4 au centre de celui-ci. La roue à aubes n'a pas besoin d'être fixée à la paroi du récipient par son axe de rotation. Dans le présent exemple, elle est simplement en appui sur un bossage (non représenté) formé dans le fond du récipient et autour duquel elle peut tourner sans frottements excessifs. Cette caractéristique présente l'avantage de faciliter le démontage et le nettoyage de l'appareil de refroidissement 1. Alternativement, au lieu d'être en appui sur un bossage, la roue à aubes 6 pourrait par exemple présenter une partie centrale prévue pour s'insérer dans une dépression aménagée dans le fond du récipient 4.

Dans l'exemple illustré, l'organe moteur 6 est actionné par des moyens d'entraînement magnétique 5 disposés dans la partie inférieure de l'appareil de refroidissement 1 en dessous du récipient 4. Dans cet exemple, les moyens d'entraînement magnétiques 5 sont essentiellement formés d'un élément rotatif 7 entraîné par un moteur électrique 9. L'élément rotatif 7 peut avantageusement être logé dans le renfoncement correspondant à l'envers du bossage autour duquel tourne la roue à aubes 6. Cet élément rotatif 7 porte un arrangement radial de plusieurs parties ferromagnétiques. Ces parties ferromagnétiques sont prévues pour tourner à l'intérieur du renfoncement du fond du récipient lorsqu'elles sont entraînées par le moteur électrique 9. Au dessus du fond du récipient 4, l'organe moteur 6 porte lui-même plusieurs aimants permanents (non représentés) disposés autour du bossage aménagé dans le fond du récipient. Ces aimants permanents sont prévus pour être entraînés en rotation par couplage magnétique avec les parties ferromagnétiques de l'élément rotatif 7. On comprendra de ce qui précède qu'aucune liaison mécanique ou électrique n'est requise entre les moyens d'entraînement magnétique 5 et la roue à aubes 6. Cette dernière est entraînée en rotation sans contact par l'effet du champ magnétique agissant à travers le fond du récipient 4. Ce type de mécanisme d'entraînement est connu de l'homme du métier. On trouvera notamment une description plus détaillée de moyens d'entraînement magnétiques compatibles avec le présent mode de réalisation de l'invention dans le document de brevet EP 1 656 866 A1 qui est incorporé par référence dans la présente description.

Un avantage des moyens d'entraînement magnétique 5 non-intrusifs comme ceux qui viennent d'être décrits est qu'ils permettent d'éviter le recours à un axe de transmission traversant la paroi du récipient. Ainsi, l'étanchéité du récipient 4 peut être garantie. Un autre avantage est d'éviter les problèmes d'hygiène grâce à la possibilité d'avoir un récipient 4 formé d'une seule pièce sans aucune ligne de jonction, et donc facile à nettoyer.

En tournant, la roue à aubes 6 communique un mouvement circulaire au liquide alimentaire. La force centrifuge associée au mouvement circulaire introduit une composante radiale ayant pour effet de pousser le liquide en direction de la périphérie du récipient 4. Le flux de liquide alimentaire quittant ainsi la zone centrale de la roue a aubes pour sa périphérie est compensé par un flux de liquide qui redescend vers la roue à aubes à travers la zone centrale du récipient. Comme on l'a dit plus haut, outre le liquide alimentaire à refroidir, le récipient 4 est prévu pour recevoir au moins un corps de refroidissement amovible 10. Celui-ci constitue un obstacle pour la circulation du liquide. Propulsé par l'organe moteur 6, le liquide alimentaire va donc être contraint de suivre un circuit passant par des conduits aménagés dans, ou autour, du corps de refroidissement 10.

Le corps de refroidissement 10 présente une géométrie particulière destinée à optimiser l'effet de refroidissement en augmentant la surface du liquide alimentaire en contact avec lui. A cet effet, il est muni de conduits et de canaux 11, 12 aux travers desquels le liquide alimentaire passe de manière prédéterminée, notamment en termes de vitesse et de direction. Selon l'objet de l'invention, le flux du liquide alimentaire à travers le corps de refroidissement 10 permet de favoriser sensiblement l'échange thermique et de diminuer ainsi le temps nécessaire pour amener le liquide alimentaire à basse température. On voit sur la figure 1 que, dans le présent exemple, le corps de refroidissement amovible 10 est de forme cylindrique, et qu'il est disposé au-dessus de la roue à aubes 6. Il présente au moins une gorge 11 qui s'étend selon un tracé hélicoïdal sur sa paroi extérieure cylindrique. Lorsque le corps de refroidissement est en place dans le récipient, cette gorge 11 constitue un canal entre la paroi du récipient 4 et le corps de refroidissement 10. Ce canal ou conduit hélicoïdal 11 est orienté dans le sens de rotation de la roue à aubes 6 de manière à constituer un conduit ascensionnel pour le liquide alimentaire. On comprendra que selon une variante, la gorge 11 creusée dans la paroi extérieure du corps de refroidissement 10 pourrait être remplacée par une gorge creusée dans la paroi intérieure du récipient 4. Lorsque le corps de refroidissement 10 est en place dans le récipient 4, ces deux variantes sont équivalentes dans la mesure où au moins un conduit hélicoïdal ou d'une autre forme est formé entre la paroi du récipient et le corps de refroidissement.

Des conduits traversants verticaux 12 sont encore aménagés dans l'épaisseur du corps de refroidissement 10. On voit sur les figures 1 et 2, que les conduits traversants verticaux s'étendent entre la face supérieure du corps de refroidissement 10 et sa partie inférieure. Conformément à ce qui est représenté dans la figure 2, la face supérieure du corps de refroidissement 10 n'est de préférence pas tout à fait plane, mais légèrement concave. En effet, la surface présente une légère inclinaison en direction de son centre, de manière à favoriser un écoulement à partir de la périphérie du récipient en direction du centre.

Le circuit parcouru par le liquide alimentaire dans le récipient 4 est le suivant. Propulsé par la roue à aubes 6 vers la périphérie du récipient, et guider par la partie inclinée 8 du fond, le liquide va être amené à emprunter le conduit hélicoïdal 11. Sous l'effet de la pression, le liquide alimentaire va s'élever entre le bord du corps de refroidissement 10 et la paroi verticale intérieure du récipient 4. Arrivé en haut du récipient, le liquide alimentaire s'écoule vers le centre de la face supérieure inclinée du corps de refroidissement 10. Le liquide alimentaire rencontre ainsi l'embouchure d'un des conduits traversant 12, et peut ainsi redescendre par ce conduit 12 vers la partie inférieure du récipient et la roue à aubes 6. On comprendra que c'est la roue à aubes 6 qui assure la circulation du liquide alimentaire par effet centrifuge radial et aspiration axiale sur le liquide. Grâce à la présence de cet organe moteur 6, le circuit fermé qui vient d'être décrit pourra être parcouru par le liquide à de nombreuses reprises assurant un refroidissement efficace.

Comme on l'a déjà dit, dans ce mode de réalisation, le corps de refroidissement 10 présente une forme sensiblement cylindrique d'un diamètre extérieur sensiblement égal au diamètre intérieur de la récipient 4, de sorte qu'il peut coulisser dans la récipient. Dans le présent exemple, le corps de refroidissement est constitué de deux éléments complémentaires 14 et 15 s'emboîtant l'un dans l'autre. Le premier élément 14, qui pour fonction de collecter le liquide alimentaire, entoure le deuxième élément. Le deuxième élément 15 remplit la fonction d'accumulateur de froid. Le premier élément 14, appelé ci-après le collecteur, est prévu pour ramener le liquide alimentaire redescendu par les conduit 12 vers la zone centrale de la roue à aubes 6. La partie inférieure du collecteur 14 fonctionne donc un peu à la manière d'un entonnoir pour le liquide alimentaire.

Le deuxième élément 15 du corps de refroidissement 10, appelé ci-après l'accumulateur de froid, est destiné à s'emboîter par coulissement dans la partie supérieure du collecteur 14. L'accumulateur de froid 15 est de forme cylindrique et présente des faces supérieure et inférieure qui sont reliées par les conduits verticaux 12. Le corps de refroidissement comporte encore des compartiments 13 disposés entre les conduits 12. Ces compartiments hermétiques sont prévus pour accumuler du froid durant le refroidissement préalable du corps réfrigérant amovible 10, et pour ensuite, durant le fonctionnement de l'appareil, céder ce froid au liquide alimentaire circulant dans les conduits verticaux 12 ainsi que dans le conduit hélicoïdal 11. Les compartiments hermétiques 13 peuvent, par exemple, être remplis d'un gel ou liquide accumulateur de froid d'un type connu de l'homme du métier. Dans ce cas, le gel ou liquide est de préférence introduit dans les compartiments, une fois pour toute, lors de la fabrication du refroidisseur 10.

Grâce aux caractéristiques qui viennent d'être décrites, l'appareil 1 pour le refroidissement d'un liquide alimentaire permet de faire circuler le liquide alimentaire en circuit fermé tout en le refroidissant rapidement.

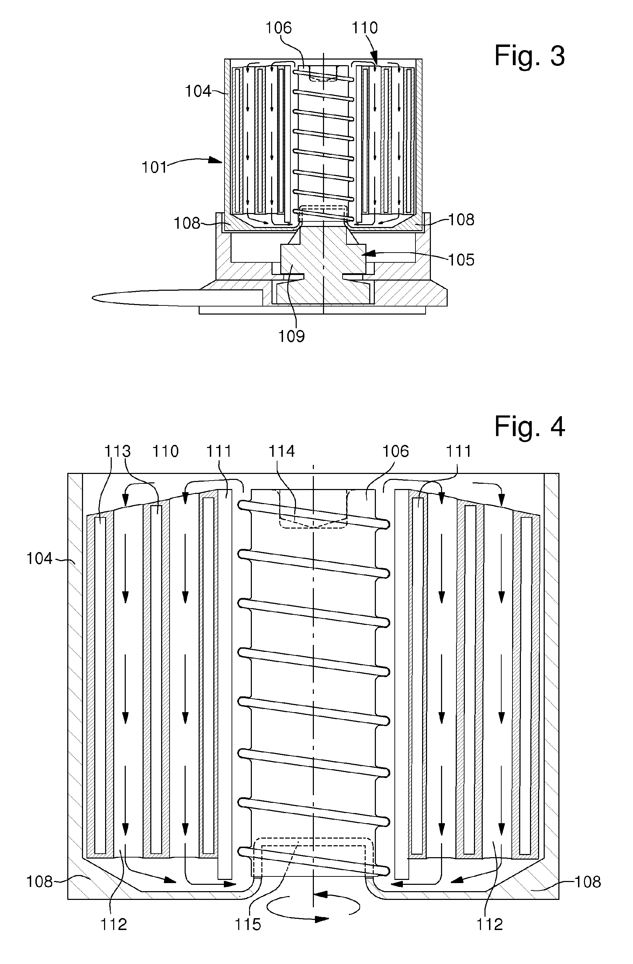

Un deuxième mode de réalisation de la présente invention sera maintenant décrit en se référant aux figures 3 et 4. Ce deuxième mode de réalisation est prévu pour refroidir ou maintenir froid un liquide ayant une viscosité élevée et/ou contenant de la mousse, comme un "frappé" par exemple. Comme on peut le voir sur les figures, dans ce deuxième mode de réalisation, l'organe moteur 106 pour la mise en mouvement du liquide alimentaire est une vis sans fin. Cette vis sans fin est prévue pour élever le liquide et remplit donc la fonction de vis d'Archimède. Dans, le présent exemple, cette vis d'Archimède n'est pas fixée au fond du récipient 104 par son axe de rotation. De façon semblable à ce qui a été décrit concernant la roue à aubes du premier exemple, la vis d'Archimède est simplement centrée par un bossage 115 formé par le fond du récipient 104. La vis d'Archimède 106 est verticale et traverse le corps de refroidissement amovible 110 de bas en haut. Conformément à ce que montre encore la figure 4, la vis d'Archimède peut comporter sur son extrémité supérieure, une creusure axiale 114. Cette creusure est prévue pour coopérer avec un téton (non représenté) formé sur la face inférieure du couvercle (non représenté) du récipient 104. Cette caractéristique permet d'assurer le centrage de la vis d'Archimède par ses deux extrémités de manière à la rendre plus stable en rotation.

Contrairement à ce qui était le cas dans l'exemple décrit en référence à la figure 1, dans le présent mode de réalisation, le corps de refroidissement 110 est réalisé en une seule pièce. Cette pièce est de forme généralement cylindrique avec un diamètre extérieur sensiblement égal au diamètre intérieur du récipient 104. Le corps de refroidissement 110 présente encore un passage cylindrique vertical garni sur son pourtour de chicanes verticales 111. Ce passage cylindrique est destiné à laisser passer la vis d'Archimède 106, et les chicanes 111 ont pour fonction d'empêcher le liquide d'être mis en rotation par la vis. Comme dans l'exemple précédent, le corps de refroidissement comporte des conduits verticaux 112 reliant sa face supérieure à sa face inférieure. Entre ces conduits verticaux 112 sont également disposés des compartiments hermétiques 113 de grandeur et de forme prédéterminées, remplis d'un gel, de manière à refroidir le liquide alimentaire. On voit encore sur la figure 3 que la face supérieure du corps de refroidissement 110 est légèrement convexe et qu'elle s'abaisse en direction des bords du récipient 104.

Ainsi, dans ce deuxième mode de réalisation, c'est la vis d'Archimède qui permet de faire circuler le liquide alimentaire en circuit fermé. A cet effet, la vis d'Archimède 106 est actionnée par les moyens d'entraînement magnétiques 105. Ces moyens d'entraînements peuvent être de tous types connus de l'homme du métier. Toutefois, il s'agit de préférence de moyens magnétiques analogues à ceux qui ont déjà été décrits en relation avec l'exemple représenté par la figure 1. On voit sur la figure 4, que les filets de la vis 106 présentent un profil en forme de lame. Lorsque l'appareil fonctionne, la majeure partie de la vis d'Archimède 106 est immergée dans le liquide alimentaire visqueux. Lorsque la vis tourne, la présence des chicanes 111 empêche le liquide d'accompagner le mouvement de rotation. Le liquide visqueux est donc contraint de s'élever à travers le corps de refroidissement 110 jusqu'à ce qu'il atteigne la face supérieure de ce dernier. Le liquide alimentaire peut ensuite s'écouler en direction de la périphérie du récipient sur la face supérieure inclinée du corps de refroidissement. Le liquide alimentaire peut ainsi pénétrer dans les conduits verticaux 112, et traverser ces derniers de haut en bas, pour être finalement guidé, en direction de la vis d'Archimède, par la partie périphérique 108 inclinée du fond du récipient, de façon à recommencer le cycle.

On comprendra en outre que diverses modifications et/ou améliorations évidentes pour un homme du métier peuvent être apportées aux modes de réalisation qui font l'objet de la présente description sans sortir du cadre de la présente invention définie par les revendications annexées. En particulier, il possible par exemple d'ajouter un capteur de température pour mesurer la température du liquide alimentaire et/ou la température du récipient. On peut également prévoir d'installer un indicateur de température et un bouton d'activation des moyens d'entraînement magnétique opérable par l'utilisateur. Lorsque le bouton est pressé ou activé, il commande l'alimentation électrique du moteur électrique 7 ou 107 qui entraîne l'organe moteur 6 ou 106 en rotation. La régulation de la température du liquide alimentaire peut aussi être automatisée. Ainsi, les moyens d'entraînement magnétiques 5 ou 105 peuvent être automatiquement arrêtés quand une température de référence sélectionnée au préalable est atteinte. Un dispositif d'avertissement peut également émettre un signal pour l'utilisateur lorsque le liquide alimentaire est prêt.

Il est naturellement également possible, par exemple, de remplacer le moteur électrique 7 ou 107 par un dispositif à ressort prévu pour être remonté par l'utilisateur, ou encore plus simplement par une manivelle. D'autre part, les moyens d'entraînement magnétique 7 ou 107 non-intrusifs pourraient naturellement être remplacés par des moyens d'entraînement mécanique comportant un arbre de transmission traversant la paroi du récipient 4 ou 104 pour entraîner directement l'organe moteur 6 ou 106. Il est également possible de prévoir d'autres formes géométriques du corps de refroidissement 10 ou 110, de l'organe moteur 6, ou 106 et du récipient 4 ou 104.

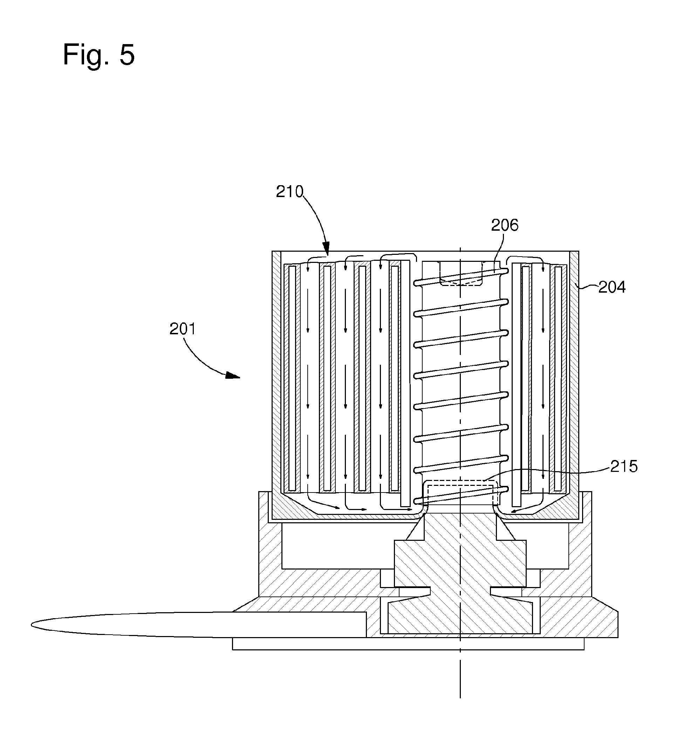

Finalement, la figure 5 représente encore un autre mode de réalisation de l'appareil pour le refroidissement d'un liquide alimentaire selon la présente invention, l'appareil 201 selon ce mode de réalisation est très semblable à celui précédemment décrit en référence aux figures 3 et 4. Comme dans l'exemple précédent, l'appareil référencé 201 sur la figure comporte un récipient 204 dans lequel est logé un corps de refroidissement amovible 210, et ce corps de refroidissement présente un passage cylindrique destiné à laisser passer une vis d'Archimède 206 qui est elle-même centrée sur un bossage 215 formé sur le fond du récipient 204. Toutefois, dans ce nouveau mode de réalisation, la vis d'Archimède occupe une position décentrée dans le récipient. Le but de cette disposition particulière est d'utiliser pour l'appareil selon l'invention le produit existant défini dans la demande de brevet EP1656866A1. Ainsi, en installant une vis d'Archimède 206 et un corps de refroidissement 210 selon l'invention dans le récipient 204 d'un appareil initialement prévu pour préparer de la mousse de lait, on peut utiliser ce dernier pour refroidir une boisson.

## Revendications

1. Appareil pour le refroidissement d'un liquide alimentaire comprenant un récipient (4 ; 104 ; 204) pour le liquide alimentaire à refroidir et des moyens de refroidissement disposés dans le récipient (6, 10 ; 106, 110 ; 206, 210) **caractérisé en ce que** les moyens de refroidissement comprennent au moins un corps de refroidissement amovible (10 ; 110 ; 210) et conformé de manière à délimiter au moins un circuit pour le liquide alimentaire; un organe moteur (6, 106 ; 206) étant par ailleurs prévu pour faire circuler le liquide alimentaire dans le circuit.

2. Appareil selon la revendication 1, **caractérisé en ce que** l'organe moteur est une pompe entraînable en rotation.

3. Appareil selon la revendication 1, **caractérisé en ce que** l'organe moteur est une pompe centrifuge.

4. Appareil selon la revendication 3, **caractérisé en ce que** l'organe moteur est une roue à aubes (6) disposée dans le récipient (4) et prévue pour tourner autour d'un axe vertical.

5. Appareil selon les revendications 3 ou 4, **caractérisé en ce que** ledit circuit comprend au moins un premier conduit (11) aménagé entre la surface externe du corps de refroidissement (10) et la paroi intérieure du récipient (4).

6. Appareil selon la revendication 5, **caractérisé en ce que** le premier conduit (11) est un conduit hélicoïdal ascensionnel prévu pour permettre au liquide alimentaire de monter le long de la surface du corps de refroidissement (10).

7. Appareil selon les revendications 5 ou 6, **caractérisé en ce que** ledit circuit comprend au moins un second conduit traversant (12) passant à travers le corps de refroidissement (10).

8. Appareil selon la revendication 7, **caractérisé en ce que** le corps de refroidissement (10) est disposé au-dessus de la pompe (6), et **en ce que** le conduit traversant (12) est orienté verticalement est prévu pour permettre au liquide alimentaire de descendre en traversant le corps de refroidissement.

9. Appareil selon l'une quelconque des revendications 3 à 8, **caractérisé en ce que** la partie inférieure du corps de refroidissement (10) est conformée pour ramener le liquide sortant du conduit traversant (12) vers une zone centrale de la pompe (6).

10. Appareil selon l'une des revendications précédentes, **caractérisé en ce que** la face supérieure du corps de refroidissement a un profil concave et s'abaisse en direction de son centre.

11. Appareil selon la revendication 2, **caractérisé en ce que** l'organe moteur (106 ; 206) est une pompe à déplacement positif.

12. Appareil selon la revendication 11, **caractérisé en ce que** l'organe moteur (106 ; 206) est une vis d'Archimède.

13. Appareil selon la revendication 12, **caractérisé en ce que** la vis d'Archimède (106 ; 206) est orientée verticalement.

14. Appareil selon la revendication 12 ou 13, **caractérisé en ce que** la face supérieure du corps de refroidissement a un profil convexe et s'abaisse en direction de sa périphérie.

15. Appareil selon l'une des revendications précédentes **caractérisé en ce que** le récipient (4 ; 104 ; 204) et le corps de refroidissement ont des formes complémentaires, et **en ce que** le corps de refroidissement est prévu pour s'emboîter dans le récipient.

16. Appareil selon l'une des revendications précédentes, **caractérisé en ce que** le récipient (4 ; 104 ; 204) et le corps de refroidissement (10 ; 110 ; 210) sont de forme cylindrique.

17. Appareil selon l'une des revendications précédentes, **caractérisé en ce que** le fond du récipient (4 ; 104 ; 204) est conformé de manière à constituer des moyens de positionnement (115 ; 215) pour guider l'organe moteur (6 ; 106 ; 206) en rotation.

18. Appareil selon l'une des revendications précédentes, **caractérisé en ce que** l'organe moteur (6, 106 ; 206) est actionné par des moyens d'entraînement magnétique (5, 105 ; 205) non-intrusifs positionnés sous le récipient (4, 104 ; 204), et prévus pour entraîner l'organe moteur à distance à travers la paroi du récipient sans liaison mécanique ou électrique.

19. Corps de refroidissement pour refroidir un liquide alimentaire comprenant au moins un compartiment hermétiques (13 ; 113) remplis d'une substance accumulatrice de froid, **caractérisé en ce qu'**il comporte une face supérieure et une face inférieure et au moins un premier canal (11, 12 ; 112) prévu pour conduire le liquide alimentaire d'une face à l'autre.

20. Corps de refroidissement selon la revendication 19, **caractérisé en ce que** le premier canal est prévu pour conduire le liquide de la face supérieure à la face inférieure.

21. Corps de refroidissement selon la revendication 20, **caractérisé en ce que** le premier canal (12 ; 112) comprend au moins une portion verticale.

22. Corps de refroidissement selon la revendication 20 ou 21, **caractérisé en ce qu'**il comporte un deuxième canal (11) prévu pour conduire le liquide de la face inférieure à la face supérieure.

23. Corps de refroidissement selon la revendication 22, **caractérisé en ce que** le deuxième canal (11) est hélicoïdal.

24. Corps de refroidissement selon la revendication 23, **caractérisé en ce que** le deuxième canal est ouvert vers l'extérieur et arrangé dans la paroi extérieure dudit corps.

25. Corps de refroidissement selon l'une des revendications 22 à 24, **caractérisé en ce que** le premier canal comporte une portion inférieure (14) prévue pour guider le liquide alimentaire en direction du centre de la face inférieure.

26. Corps de refroidissement selon la revendication 24 ou 25, **caractérisé en ce que** la face supérieure a un profil concave et s'abaisse en direction de son centre.

27. Corps de refroidissement selon la revendication 19 ou 20, **caractérisé en ce qu'**il comporte un passage cylindrique prévu pour recevoir une vis d'Archimède (106 ; 206).

28. Corps de refroidissement selon la revendication 27, **caractérisée en ce que** la face supérieure est convexe et **en ce que** le passage débouche dans ladite face supérieure au-dessus des premiers canaux.

29. Corps de refroidissement selon la revendication 27 ou 28, **caractérisée en ce que** le passage cylindrique est vertical.

30. Corps de refroidissement selon la revendication 29, **caractérisé en ce que** le passage cylindrique occupe le centre du corps de refroidissement.

31. Corps de refroidissement selon l'une des revendications 27 à 30, **caractérisé en ce que** le passage cylindrique est garni de chicanes verticales (111).

32. Corps de refroidissement selon l'une des revendications 19 à 31, **caractérisé en ce qu'**il est réalisé en une pièce ou en deux pièces (14, 15) prévues pour coulisser l'une à l'intérieur de l'autre.

33. Corps de refroidissement selon l'une des revendications 19 à 32, **caractérisé en ce qu'**il est prévu pour être utilisé dans l'appareil défini par les revendications 1 à 18.
